# EUROPÄISCHE PATENTANMELDUNG

(11) **EP 1 912 179 A2**
(43) Veröffentlichungstag der Anmeldung: **16.04.2008**
(21) Anmeldenummer: 07018992.3
(22) Anmeldetag: 27.09.2007
(51) Int. Cl.: G07C 9/00, G06K 19/077, G07F 7/12

(54) **Vorrichtung zur Authentifizierung**

(30) Priorität: 14.10.2006 DE 202006016358 U
(71) Anmelder: nanoCrypt AG, 70565 Stuttgart (DE)
(72) Erfinder: Krüger, Manfred, 73650 Winterbach (DE)
(74) Vertreter: Raible, Tobias

(57) **Zusammenfassung**

Die Erfindung betrifft eine Vorrichtung zur Authentifizierung über eine Lesevorrichtung, mit einer Signalfolgenerzeugungsvorrichtung (30) zur Erzeugung einer Signalfolge, mit einer Flüssigkristallzelle (100), welche dazu ausgebildet ist, in Abhängigkeit von der Signalfolge ihren Zustand zu ändern. Weiterhin betrifft die Erfindung eine Auslesevorrichtung zum Auslesen einer solchen Vorrichtung, ein Türzugangssystem und ein Computer-Authentifizierungssystem.

## Beschreibung

Die Erfindung betrifft eine Vorrichtung zur Authentifizierung einer Person oder eines Geräts.

Bei sicherheitsrelevanten Anwendungen wird von Identifizierung und Authentifizierung gesprochen. Bei einer genauen Differenzierung wird bei der Identifizierung geklärt, wer jemand ist, und bei der Authentifizierung, ob derjenige es beweisen kann. Die Begriffe werden aber - wie im Folgenden - auch häufig synonym verwendet.

Bei einfachen Authentifizierungsvorgängen gibt der Benutzer beispielsweise seinen Benutzernamen und sein Passwort ein, beim Online-Banking wird häufig eine Kombination aus PIN (Personal Identification Number) genanntem persönlichen Zugangscode und einer aus einer Liste zu wählenden TAN (Transaction Number) verwendet, wobei jede TAN jeweils nur für eine Transaktion gültig ist. Die Gültigkeit wird dabei z.B. vom Diensteanbieter mit Hilfe einer internen Datenbank geprüft. Ein Problem hierbei ist, dass es für Internet-Benutzer lästig ist, solche TAN-Listen mitzuführen, und dass der administrative Aufwand für das Versenden der TAN-Listen groß ist. Ein weiteres, immer größer werdendes Problem besteht im so genannten Phishing, bei dem Betrüger versuchen, die Benutzerdaten von Internet-Benutzern auszuspähen, und die Internet Benutzer z.B. zur Eingabe der Benutzerdaten zu bewegen.

Andere Authentifizierungsverfahren arbeiten mit einem physischen Authentifizierungsgegenstand, welcher im Englischen auch "access token" genannt wird. Ein solcher Authentifizierungsgegenstand hat den Vorteil, dass der Benutzer sich weniger Benutzerdaten merken bzw. aufschreiben muss, und er kann insbesondere bei Internet-Anwendungen nicht zum Eintippen der Benutzerdaten überredet werden, wie es beim Phishing häufig vorkommt, da er die auf dem Authentifizierungsgegenstand gespeicherten Daten nicht kennt. Beispielsweise werden beim Abheben von Bargeld Scheckkarten mit Magnetstreifen in Zusammenhang mit einer PIN verwendet. Nachteilig an dieser Technologie sind die hohe Verschleißanfälligkeit des Magnetstreifens sowie die Komplexität und die hohen Kosten der Lesevorrichtungen für Magnetstreifen. Die hohen Kosten für die Lesevorrichtung sind bei einem Einsatz in Bankfilialen weniger relevant, ein Massen-Einsatz an einer großen Anzahl von Rechnern ist dagegen schlecht möglich. Auch in der Gebäudetechnik werden für den Zugang zu bestimmten Bereichen Magnetkarten an den jeweiligen Türen verwendet, wobei auch hier die Lesegeräte zu nicht unerheblichen Kosten führen.

Es ist daher Aufgabe der Erfindung, eine neue Vorrichtung zur Authentifizierung bereitzustellen.

Die Aufgabe wird gelöst durch eine Vorrichtung gemäß Anspruch 1. Eine solche Vorrichtung ist auf Grund der Verwendung einer Flüssigkristallzelle zur Ausgabe von Daten günstig herzustellen und schwer zu kopieren, und sie ermöglicht eine günstige Auslesevorrichtung.

Die Aufgabe wird weiterhin gelöst durch eine Auslesevorrichtung gemäß Anspruch 17. Eine solche Auslesevorrichtung ist günstig herzustellen und äußerst verschleißfrei.

Weitere Einzelheiten und vorteilhafte Weiterbildungen der Erfindung ergeben sich aus den im folgenden beschriebenen und in den Zeichnungen dargestellten, in keiner Weise als Einschränkung der Erfindung zu verstehenden Ausführungsbeispielen, sowie aus den Unteransprüchen. Es zeigt
- Fig. 1: eine schematische Darstellung einer erfindungsgemäßen Karte von hinten,
- Fig. 2: eine schematische Darstellung einer inneren Lage der Karte aus Fig. 1,
- Fig. 3: eine schematische Darstellung der Karte aus Fig. 1 von vorne,
- Fig. 4: eine schematische Darstellung einer ersten Schaltung einer Karte gemäß Fig. 1,
- Fig. 5: eine schematische Darstellung einer zweiten Schaltung einer Karte gemäß Fig. 1,
- Fig. 6: den schematischen Aufbau einer Flüssigkristallzelle,
- Fig. 7: eine schematische Darstellung eines Lesegeräts,
- Fig. 8: einen Verfahrensablauf für eine Authentifizierung mit einem Lesegerät gemäß Fig. 7,
- Fig. 9: eine schematische Darstellung eines Lesegeräts,
- Fig. 10: einen Verfahrensablauf für eine Authentifizierung mit einem Lesegerät gemäß Fig. 9
- Fig. 11: eine schematische Darstellung eines Anwendungsbeispiels für das Lesegerät, und
- Fig. 12: eine schematische Darstellung der Ansteuerungs- und Ausgangssignale für die Karte aus Fig. 1.

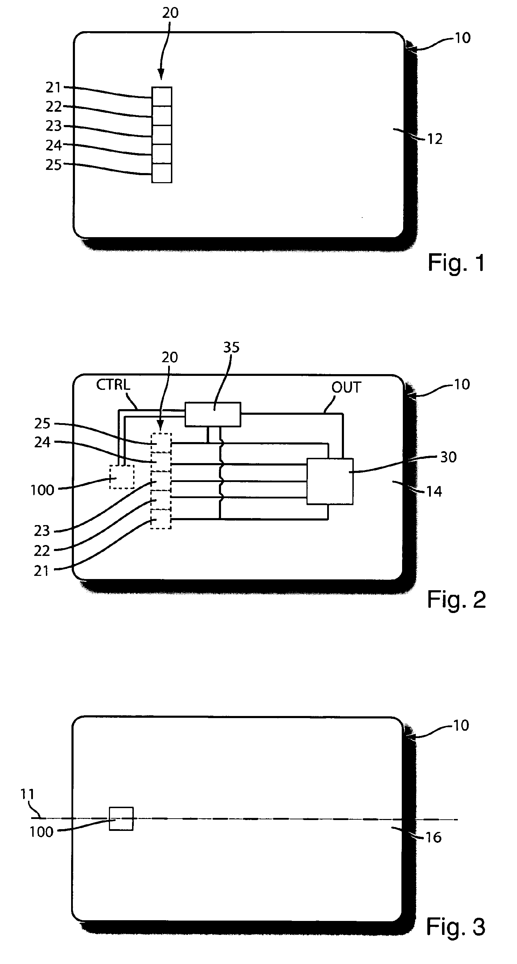

**Fig. 1** zeigt die Rückseite 12 einer Karte 10. Die Rückseite 12 hat fünf elektrische Kontakte 20, von denen die Kontakte 21 und 25 für die Stromversorgung (+ 5 V und Masse GND) und die Kontakte 22, 23 und 24 zur seriellen Datenübertragung vorgesehen sind. Der Kontakt 22 ist für das Auswahl-Signal, der Kontakt 21 für das serielle Datensignal und der Kontakt 24 für ein Taktsignal vorgesehen. Die serielle Datenübertragung kann zur Ein- und Ausgabe vorgesehen sein, in einer bevorzugten Ausführungsform ist jedoch nur eine Dateneingabe zur Karte 10 hin möglich, um zu verhindern, dass Daten aus der Karte 10 ausgelesen werden können.

**Fig. 2** zeigt eine innere Lage 14 der Karte 10. Dargestellt sind die elektrischen Kontakte 20, ein IC 30, eine Schalter-Matrix 35 und eine Flüssigkristallzelle 100. Die elektrischen Kontakte 20 sind mit dem IC 30 und die Kontakte 21, 25 zur Stromversorgung zusätzlich mit der Schalter-Matrix 35 verbunden. Der IC 30 ist mit der Schalter-Matrix 35 zur Ausgabe eines Signals OUT verbunden, und die Schalter-Matrix 35 ist mit der Flüssigkristallzelle 100 zu dessen Ansteuerung mit einem Signal CTRL verbunden.

**Fig. 3** zeigt die Vorderseite 16 der Karte 10, auf der die Flüssigkristallzelle 100 angeordnet ist. Die Flüssigkristallzelle 100 ist bevorzugt auf der Längsachse 11 der Karte 10 und weiter bevorzugt asymmetrisch, d.h. näher an einer der kurzen Seiten angeordnet.

Die Karte 10 hat bevorzugt eine Größe von 54 mm (Höhe) * 85 mm (Breite). Die elektrischen Kontakte 20 können je nach Anwendungsfall auch auf eine andere Art angeordnet werden.

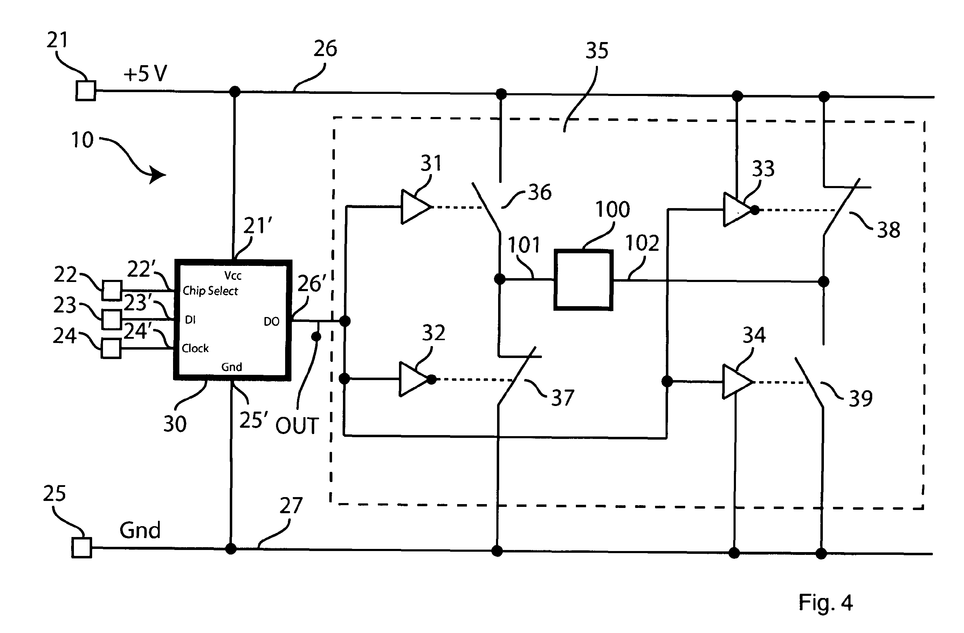

**Fig. 4** zeigt den Aufbau der auf der Karte 10 vorgesehenen Schaltung. Der IC 30 ist in diesem Ausführungsbeispiel als nichtflüchtiger Speicher, bevorzugt als serielles EEPROM (z.B. ein AT25HP256 der Fa. Atmel) ausgebildet, und er hat einen Eingang "Chip Select" 22', der mit dem Kontakt 22 verbunden ist, einen Anschluss "DI" 23', der mit dem Kontakt 23 verbunden ist, einen Anschluss "Clock" 24', der mit dem Kontakt 24 verbunden ist, einen Anschluss "Vcc" 21', der über eine Plus-Leitung 26 mit dem Kontakt 21 (+ 5 V) verbunden ist, einen Anschluss "Gnd" 25', der über eine Masse-Leitung 27 mit dem Kontakt 25 verbunden ist, und einen Ausgabeanschluss "DO" 26', über den ein digitales Signal OUT ausgebbar ist.

Die Flüssigkristallzelle 100 hat einen ersten Anschluss 101 und einen zweiten Anschluss 102. Der erste Anschluss 101 ist über einen Schalter 36 mit der Plus-Leitung 26 und über einen Schalter 37 mit der Masse-Leitung 27 verbunden, und in gleicher Weise ist der Anschluss 102 über einen Schalter 38 mit der Plus-Leitung 26 und über einen Schalter 39 mit der Masse-Leitung 27 verbunden. Jedem der Schalter 36, 37, 38 bzw. 39 ist ein Treiber 31, 32, 33 bzw. 34 zur Ansteuerung zugeordnet. Die Treiber 31, 32, 33 und 34 sind mit dem Ausgang 26' des IC 30 verbunden und durch diesen steuerbar. Eine solche Beschaltung der Flüssigkristallzelle 100 kann auch als Vollbrückenschaltung bezeichnet werden. Die Treiber 32 und 33 sind invertierend ausgebildet, so dass beispielsweise bei einer Ausgabe des Signals OUT mit dem Wert "HIGH" (z.B. + 5 V) der linke obere Schalter 36 und der rechte untere Schalter 34 geschlossen werden, so dass an der Flüssigkristallzelle 100 eine Spannung U_FK = 5 V anliegt. Ist das Signal OUT dagegen "LOW", so sind der linke untere Schalter 37 und der rechte obere Schalter 38 geschlossen, der linke obere Schalter 36 und der rechte untere Schalter 39 dagegen geöffnet, wie dies in Fig. 4 dargestellt ist. Hierdurch liegt an der Flüssigkristallzelle 100 eine Spannung U_FK = -5 V an. Erfindungsgemäß ist der IC 30 dazu ausgebildet, das Signal OUT in Abhängigkeit von einer über die Kontakte 22, 23, 24 erfolgenden Eingabe und/oder in Abhängigkeit von in dem IC 30 gespeicherten Daten zu erzeugen.

Der nichtflüchtige Speicher 30 gibt in Abhängigkeit von den über die Eingabeschnittstelle (22, 23, 24) eingegebenen Daten und den im Speicher 30 gespeicherten Daten eine Signalfolge aus. Eine solche Karte 10 ist besonders günstig herzustellen, da sie ohne einen IC mit CPU wie z.B. einen Mikroprozessor oder Mikrocontroller auskommt und damit sehr günstig ist.

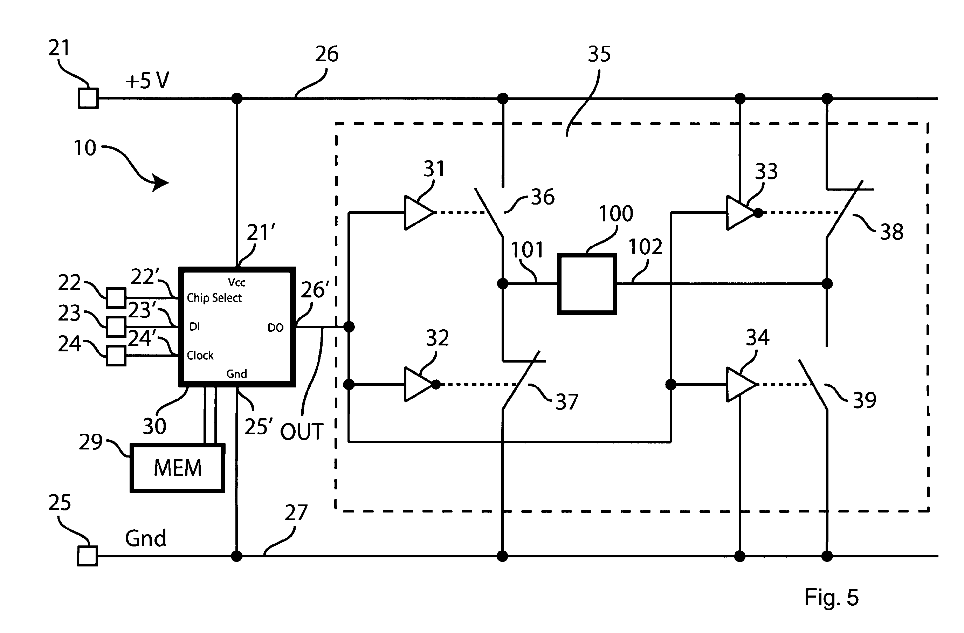

Der Speicher kann hierbei intern im IC 30 und/oder extern (vgl. Fig. 5) ausgebildet sein, und es kann sich um einen flüchtigen und/oder nichtflüchtigen Speicher handeln.

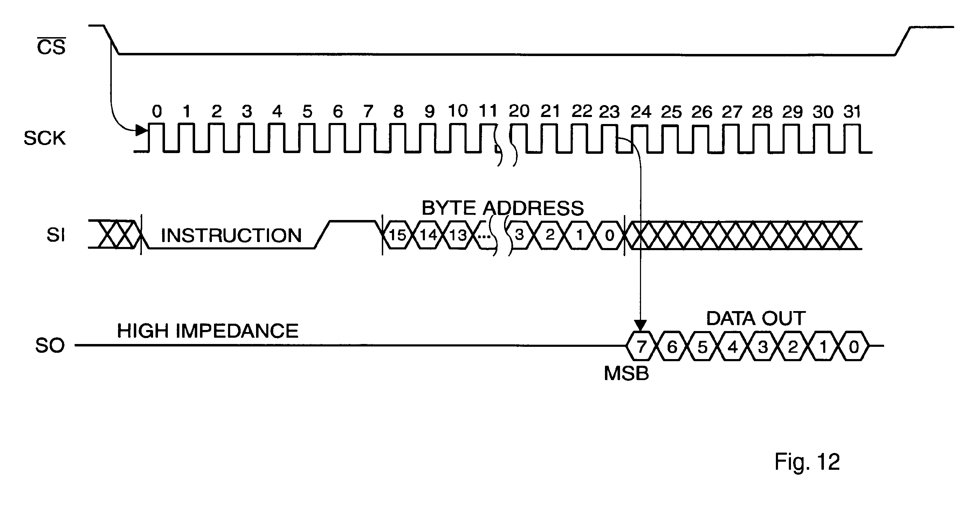

**Fig. 12** zeigt beispielhaft Eingangssignale an den Anschlüssen 22' (CS), 23' (DI bzw. SI) und 24' (SCK bzw. Clock) und das resultierende Ausgangssignal am Anschluss 26' (SO bzw. DO) an einem seriellen EEPROM 30.

**Fig. 5** zeigt eine Abwandlung der Schaltung aus Fig. 4.

Der IC 30 ist als Mikrocontroller bzw. Mikroprozessor ausgebildet, und ihm ist ein externer, nichtflüchtiger Speicher MEM 29 zugeordnet, auf dem Daten, insbesondere Identifikationsdaten gespeichert sind. Die Ausgestaltung des IC 30 ermöglicht, dass durch die Karte 10 kompliziertere Protokolle durchgeführt werden, z.B. Verschlüsselungsprotokolle, und der IC 30 kann entsprechend mit einer geeigneten Eingabeschnittstelle 20 ausgerüstet sein. Natürlich ist eine solche Lösung teurer als die Lösung aus Fig. 4, es ist jedoch eine größere Sicherheit erreichbar.

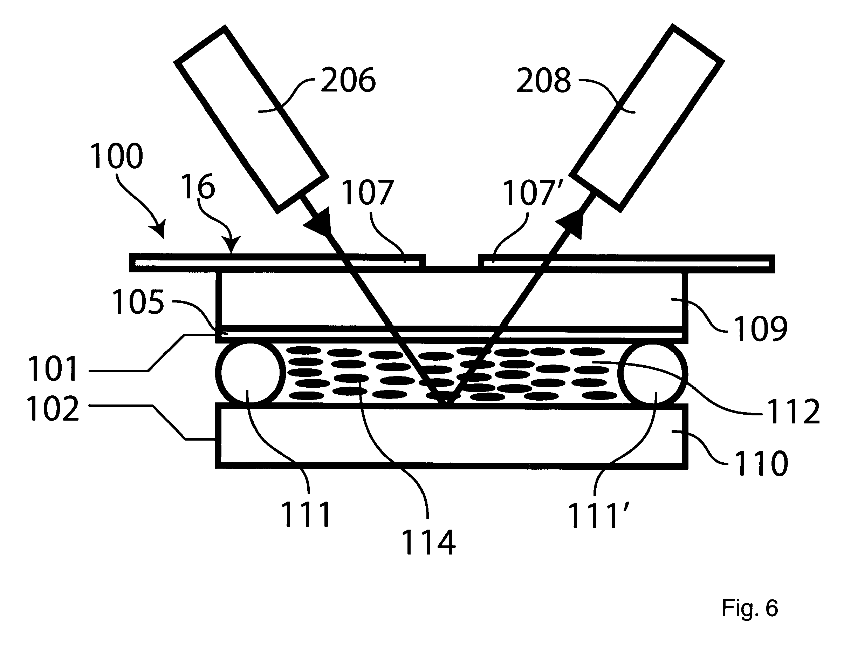

**Fig. 6** zeigt eine schematische Detaildarstellung der Flüssigkristallzelle 100. Die Flüssigkristallzelle 100 weist von der Oberseite 16 aus gesehen die folgenden Schichten auf:
• 2 senkrecht zueinander polarisierte Polarisationsfolien 107, 107',
• ein transparentes Substrat 109, welches bevorzugt aus Glas oder Polyethylenterephtalat besteht bzw. diese Materialien aufweist,
• eine Elektrodenfläche 105 unterhalb des transparenten Substrats 109, welche bevorzugt aus transparentem, leitfähigem Indium-Zinn-Oxid besteht bzw. dieses aufweist,
• Abstandhalter 111, 111', welche bevorzugt als Silica-Abstandhalter ausgebildet sind und einen Raum 112 seitlich begrenzen,
• ein diffus reflektierendes Substrat 110, bevorzugt ein Silicium-Substrat.

In dem Raum 112, der oben durch die Elektrodenfläche 105, unten durch das Silicium-Substrat 110 und seitlich durch die Abstandhalter 111, 111' begrenzt wird, ist eine geringe Menge eines ferroelektrischen Flüssigkristalls 114 angeordnet, welches bevorzugt Molekülgrößen von einigen Nanometern aufweist. Durch das Anlegen einer Spannung von +5 V bzw. -5 V zwischen den Schichten 105 und 110 ändert sich die mittlere Orientierung der Flüssigkristalle 114, und durch die Anisotropie ihrer optischen Eigenschaften wird auch die Lichtdurchlässigkeit durch die Flüssigkristallzelle 100 verändert. Es sind grundsätzlich auch andere Flüssigkristalle wie z.B. nematische Flüssigkristalle verwendbar, die ferroelektrischen Flüssigkristalle 114 ermöglichen jedoch sehr schnelle Schaltzeiten und damit eine schnelle Informationsübermittlung. Hierdurch kann eine große Menge an Informationen in sehr kurzer Zeit ausgelesen werden, und das Kopieren der Karte 10 wird erschwert.

Der Zustand der Flüssigkristallzelle 100 kann mittels einer LED (licht-emittierende Diode) 206 und einer Fotodiode 208 von außerhalb bzw. oberhalb der Karte 10 ermittelt werden. Hierzu ist die LED 206 derart angeordnet, dass das von ihr emittierte Licht 207 durch die erste Polarisationsfolie 107, das transparente Substrat 109, die Elektrodenfläche 105 und den ferroelektrischen Flüssigkristall 113 zum Silicium-Substrat 110 gelangt. Am Silicium-Substrat 110 wird das Licht 207 reflektiert, und es gelangt über den ferroelektrischen Flüssigkristall 113, die Elektrodenfläche 105, das transparente Substrat 109 und die zweite Polarisationsfolie 107' zu der Fotodiode 208 und wird dort detektiert. Das auf die Fotodiode 208 einfallende Licht wird von dieser in ein elektrisches Signal umgewandelt und kann dann ausgewertet werden.

Beim Signal OUT = LOW bzw. 0 liegt an der Flüssigkristallzelle 100 eine Spannung U_FK = -5 V an, und bei dieser Spannung kommt von dem von der LED 206 emittierten Licht 207 nichts bzw. kaum etwas an der Fotodiode 208 an. Die Flüssigkristallzelle 100 ist also lichtundurchlässig. Beim Signal OUT = HIGH liegt an der Flüssigkristallzelle 100 eine Spannung U_FK = +5 V an, und ein Großteil des von der LED 206 emittierten Lichts gelangt zur Fotodiode 208. Neben den schnellen Schaltzeiten hat die Flüssigkristallzelle 100 den Vorteil, dass die Karte 10 keine eigene Lichtquelle zur Datenübertragung bereitstellen muss. Auf der Ausleseseite bestehen ebenfalls Vorteile, da die LED 206 und die Fotodiode 208 zum einen günstig und zum anderen auch wenig fehleranfällig sind.

Als Flüssigkristallzelle 100 kann z.B. ein LCOS (liquid crystal on silicon) verwendet werden.

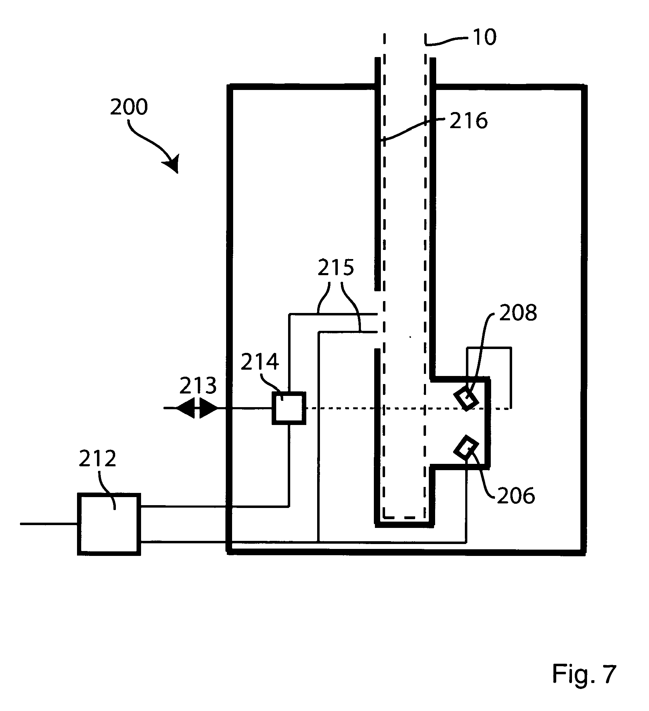

**Fig. 7** zeigt den schematischen Aufbau eines Lesegeräts 200, welches zum Auslesen der Karte 10 ausgebildet ist.

Das Lesegerät 200 hat einen Schacht 216, elektrische Kontakte 215, die LED 206 und die Fotodiode 208. Die Karte 10 ist in den Schacht 216 einführbar, so dass die elektrischen Kontakte 215 des Lesegeräts 200 mit den elektrischen Kontakten 20 der Karte 10 in Kontakt stehen, und die Flüssigkristallzelle 100 derart relativ zu der LED 206 und der Fotodiode 208 angeordnet ist, dass ein Auslesen des Zustands der Flüssigkristallzelle 100 möglich ist.

Das Lesegerät 200 hat weiterhin eine Spannungsversorgung 212, welche das Lesegerät 200 mit Spannung bzw. Strom versorgt, bevorzugt mit einer Gleichspannung von 5 V, welche z.B. aus der gebräuchlichen Netzspannung 90 ... 250 V AC (50 ... 60 Hz) oder aus einer Batterie bzw. einem Akkumulator erzeugt wird.

Ein IC 214, bevorzugt ein Mikroprozessor bzw. Mikrocontroller, steuert das Lesegerät 200, insbesondere das den elektrischen Kontakten 215 zuführbare Signal, die LED 206 und die Fotodiode 208. Der IC 214 ist mit einer Schnittstelle 213 zur Ein- bzw. Ausgabe von Daten verbunden, z.B. mit einer USB-Schnittstelle.

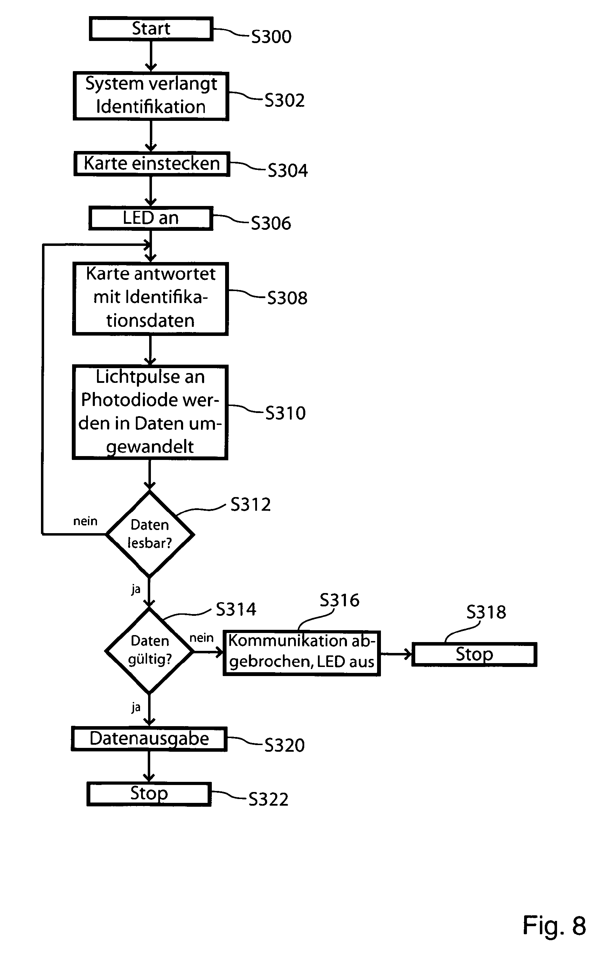

**Fig. 8** zeigt einen beispielhaften Ablauf eines Authentifizierungsvorgangs, wie er über den IC 214 gesteuert wird.

Das Verfahren beginnt im Schritt S300. Im Schritt S302 wird eine Identifikation bzw. Authentifizierung verlangt.

Zur Authentifizierung muss die Karte 10 eingesteckt werden, vgl. Schritt S304. Im Schritt S306 wird die LED 206 eingeschaltet.

Im Schritt S308 gibt die Karte 10 über die Flüssigkristallzelle 100 Identifikationsdaten bzw. Authentifizierungsdaten aus. Hierzu gibt sie z.B. auf der Karte 10 im IC 30 gespeicherte kartenspezifische Daten (Identifikationsdaten bzw. Authentifizierungsdaten) aus, und in Abhängigkeit von diesen Daten wird an die Flüssigkristallzelle 100 die Spannung +5 V bzw. -5 V angelegt. Sofern die Identifikationsdaten persönliche Daten enthalten, werden diese bevorzugt verschlüsselt ausgegeben.

Die über die Flüssigkristallzelle 100 ausgegebenen Daten werden durch die Fotodiode 208 detektiert, indem diese einen Strom erzeugt, sobald Licht auf diese fällt. Falls also das von der LED 206 ausgesandte Licht entsprechend dem Zustand der Flüssigkristallzelle 100 durchgelassen wird, wird ein Strom erzeugt, und falls kein Licht durchgelassen wird, wird kein Strom erzeugt.

Im Schritt S312 wird über den IC 214 überprüft, ob die Daten lesbar waren, was z.B. anhand einer Prüfsumme durchgeführt werden kann. Falls nicht, erfolgt ein Sprung zurück zum Schritt S308. Falls die Daten jedoch lesbar waren, erfolgt ein Sprung zum Schritt S314, und im IC 214 wird überprüft, ob die von der Karte 10 ausgegebenen Daten gültig sind. Falls nicht, erfolgt ein Sprung zum Schritt S316, die Kommunikation wird abgebrochen, und die LED 206 wird ausgeschaltet. Das Verfahren ist damit im Schritt S318 beendet. Falls die Daten jedoch im Schritt S314 gültig waren, erfolgt im Schritt S320 zur Anzeige der erfolgreichen Authentifizierung beispielsweise eine Datenausgabe über die Schnittstelle 213, und im Schritt S322 wird das Verfahren beendet.

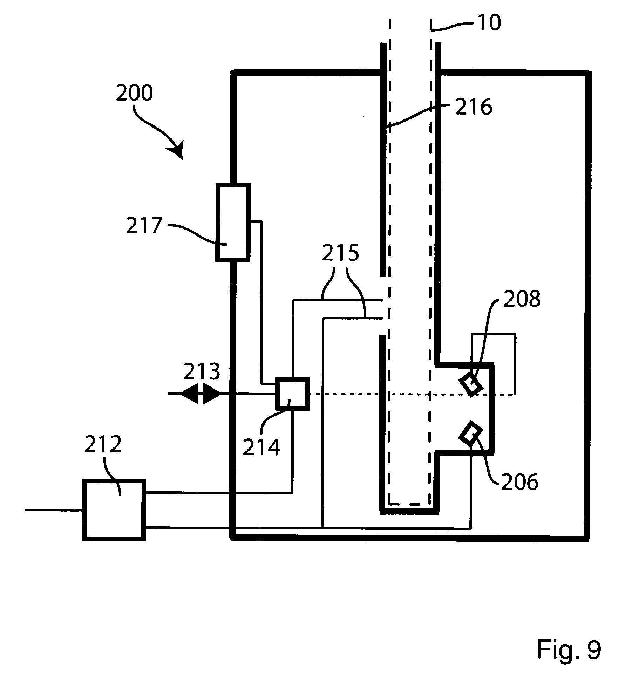

**Fig. 9** zeigt ein gegenüber Fig. 7 modifiziertes Lesegerät 200', bei welchem zusätzlich ein Eingabefeld 217 zur Eingabe eines persönlichen Zugangscodes vorgesehen ist, z.B. in Form einer PIN-Nummer. Die Eingabe des persönlichen Zugangscodes kann entweder vor der Verifikation der Zugangsdaten der Karte 10 oder aber bevorzugt danach erfolgen. Das Vorsehen eines solchen Eingabefelds 217 ermöglicht einen Schutz vor Diebstahl der Karte 10, da der Dieb zwar die Karte 10, nicht jedoch den Zugangscode hat.

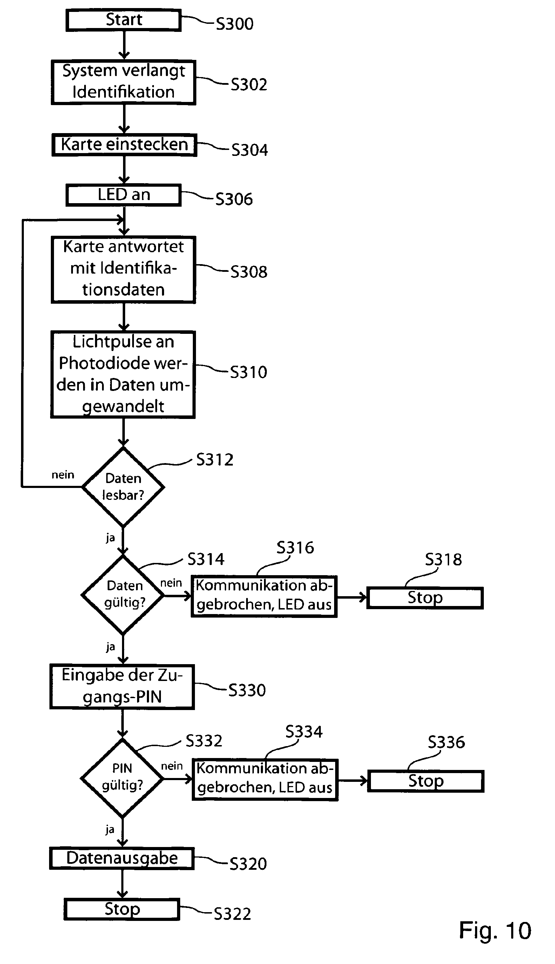

**Fig. 10** zeigt ein gegenüber Fig. 8 modifiziertes Verfahren S300', bei welchem zwischen den Schritten S314 und S320 zusätzliche Schritte S330 bis S336 eingefügt sind. Im Schritt S330 wird nach der Prüfung auf Gültigkeit der Kartendaten die Eingabe der Zugangs-PIN über das Eingabefeld 217 angefordert und durchgeführt. Anschließend wird im Schritt S332 geprüft, ob die eingegebene PIN-Nummer zu der eingeschobenen Karte 10 passt. Falls nein, erfolgt ein Sprung zum Schritt S334, die Kommunikation wird abgebrochen, und die LED 206 wird abgeschaltet (Authentifizierung fehlgeschlagen). Anschließend wird das Verfahren im Schritt S336 beendet. Falls die PIN-Nummer dagegen gültig war, erfolgt ein Sprung zum Schritt S320, und das Verfahren wird wie in Fig. 8 fortgesetzt.

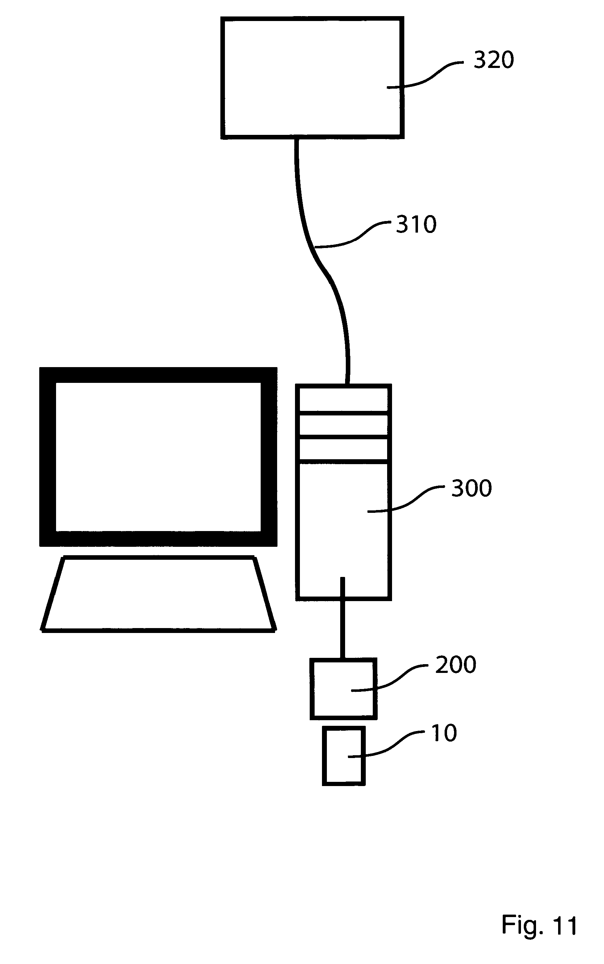

**Fig. 11** zeigt ein Anwendungsbeispiel für das Lesegerät 200 und die Karte 10 bei Internet-Anwendungen. Ein Rechner 300 mit Monitor und Eingabegerät ist z.B. über ein Netzwerkkabel und einen Router und das Internet 310 mit einem Server 320 verbunden, auf dem z.B. ein Bezahldienst läuft. An dem Rechner 300 ist z.B. über ein USB-Kabel das Lesegerät 200 angeschlossen. Der Benutzer kann sich nun gegenüber dem Server 320 authentifizieren, indem er hierzu die erfindungsgemäße Karte 10 in das Lesegerät einschiebt. Die von der Karte 10 ausgegebenen Daten werden ggf. von dem Rechner 300 verschlüsselt und an den Server 320 übermittelt. Im Server 320 findet beispielsweise ein Vergleich der Daten mit in einer Datenbank gespeicherten Daten statt, und bei Gleichheit wird der Bezahlvorgang durchgeführt. In einem bevorzugten Ausführungsbeispiel führen der Rechner 300 bzw. das Lesegerät 200 nur einen Authentifizierungsvorgang durch, wenn sich der Server 320 zuvor erfolgreich authentifiziert hat. Hierdurch kann das so genannte Phishing erfolgreich verhindert werden.

Naturgemäß sind im Rahmen der vorliegenden Erfindung vielfache weitere Abwandlungen und Modifikationen möglich.

Die Karte 10 kann für unterschiedliche Sicherheitsanforderungen unterschiedlich ausgestaltet werden.

Für Anwendungen mit geringen Sicherheitsanforderungen ist eine einfache Karte 10 ausreichend, welche nicht über eine serielle Schnittstelle zur Eingabe verfügt, und welche beim Anliegen einer Spannung vorgegebene Daten in Form einer Zustandsänderungsfolge der Flüssigkristallzelle 100 ausgibt. Die Ausgabe kann dabei zyklisch erfolgen. Eine solche Karte 10 kann z.B. für Registrierkassen verwendet werden, welche durch mehrere Kellner nutzbar sind.

Bei höheren Sicherheitsanforderungen, bei denen ein Schutz vor Diebstahl vorgesehen sein soll, wird bevorzugt am Lesegerät 200 eine Eingabevorrichtung für eine PIN-Nummer vorgesehen.

Bei noch höheren Sicherheitsanforderungen muss ein Schutz vor Kopieren vorgesehen sein. Der Grundschutz ist bereits besser als bei herkömmlichen Karten mit elektrischer Ausgabe, da das Herstellen von Karten mit Flüssigkristallzellen schwieriger als bei herkömmlichen Karten mit beispielsweise Magnetstreifen ist, das Auslesen insbesondere bei sehr schnell aufeinander folgenden Zustandswechseln nicht sichtbar bzw. schwer auslesbar ist, und ein weniger versierter Techniker auf Grund der fehlenden Eigenbeleuchtung nicht sofort erkennt, dass es sich um eine Flüssigkristallzelle handelt. Es besteht jedoch die theoretische Möglichkeit des Auslesens des über die Flüssigkristallzelle 100 ausgegebenen Signals, insbesondere wenn eine feste, sich also von einem zum nächsten Authentifizierungsvorgang nicht ändernde Signalfolge ausgegeben wird. Bei sehr sicherheitskritischen Anwendungen ist es daher vorteilhaft, dass das Lesegerät 200 beispielsweise über die serielle Schnittstelle Daten an die Karte 10 sendet, und die Karte 10 in Abhängigkeit dieser Daten ein Signal über die Flüssigkristallzelle 100 ausgibt. Hierfür können beispielsweise kryptografische Protokolle verwendet werden, insbesondere unter Verwendung von so genannten public key-Verschlüsselungsverfahren.

Bei besonders hohen Sicherheitsanforderungen können Authentifizierungsprotokolle wie z.B. Wide-Mouth Frog, Yahalom, Needham-Schroeder oder Kerberos verwendet werden, die jedoch zum Teil einen trusted server (Vertrauensserver) benötigen. Durch derartige Protokolle kann auch über ein Netzwerk sichergestellt werden, dass sowohl das Kartenlesegerät 200 bzw. die Karte 10 als auch z.B. ein Bezahldienst auf der anderen Seite der Internetverbindung wissen, wer auf der jeweils anderen Seite ist. Zur weiteren Erhöhung der Sicherheit kann eine zusätzliche gegenseitige Authentifizierung zwischen der Karte 10 und dem Lesegerät 200 erfolgen.

Es sind weitere Abwandlungen der Karte 10 denkbar, wobei diese bevorzugt immer mindestens eine Flüssigkristallzelle 100 zur Ausgabe einer Signalfolge aufweist. Die Spannungsversorgung der Karte 10 kann z.B. auch über eine in der Karte 10 vorgesehene Batterie bzw. Spannungsversorgung erfolgen, oder die Karte 10 kann eine Antenne zum Empfang einer elektromagnetischen Schwingung oder eine Solarzelle aufweisen, über welche die Versorgungsspannung bereitstellbar ist.

Die Steuerung der Flüssigkristallzelle 100 kann über einen Mikroprozessor oder Mikrocontroller mit umfassenden Funktionen oder aber auch über eine ganz einfache und kostengünstige Ansteuerungslogik erfolgen. In einer bevorzugten Ausführungsform ist der IC 30 ein einfaches nichtflüchtiges Speicherglied, z.B. ein EEPROM, und dieses wird direkt über die Eingabe-Schnittstelle angesprochen, um die Ausgabe der Signalfolge zu bewirken.

Sofern die Karte 10 eine Eingabemöglichkeit für Daten aufweist, kann diese in Form von elektrischen Signalen über Kontakte, in Form einer Antenne zur Eingabe von Daten über elektromagnetische Schwingungen oder z.B. auch in Form einer Fotodiode zum Empfang von über Licht gesendete Daten erfolgen.

Das Lesegerät 200 kann in einer besonders einfachen Ausführungsform dazu ausgebildet werden, die aus der Karte 10 ausgelesenen Daten an eine weitere Vorrichtung zu übertragen, beispielsweise über das Internet, wobei dann die weitere Vorrichtung die Authentifizierung überprüft. Dies ermöglicht ein sehr einfaches Lesegerät.

Um ein schnelles Ausgeben der Daten über die Flüssigkristallzelle 100 zu ermöglichen, werden bevorzugt Flüssigkristallzellen 100 mit einer Schaltzeit von unter 20 µs, weiter bevorzugt von unter 12 µs, weiter bevorzugt von unter 6 µs und besonders bevorzugt von unter 2 µs verwendet. Dies erhöht auch die Sicherheit vor einem Nachbau und vor unbefugtem Auslesen.

## Patentansprüche

1. Vorrichtung zur Authentifizierung über eine Lesevorrichtung (200),
mit einer Signalfolgenerzeugungsvorrichtung (30) zur Erzeugung einer Signalfolge,
mit einer Flüssigkristallzelle (100), welche dazu ausgebildet ist, in Abhängigkeit von der Signalfolge ihren Zustand zu ändern.

2. Vorrichtung nach Anspruch 1,
bei welcher die Flüssigkristallzelle (100) einen ferroelektrischen Flüssigkristall aufweist.

3. Vorrichtung nach Anspruch 1 oder 2,
bei welcher die Flüssigkristallzelle (100) derart ausgebildet ist, dass sie kein Licht erzeugt.

4. Vorrichtung nach einem der vorhergehenden Ansprüche,
bei welcher die Flüssigkristallzelle eine lichtreflektierende Schicht aufweist.

5. Vorrichtung nach einem der vorhergehenden Ansprüche,
welche in Form einer Karte, insbesondere einer Scheckkarte, ausgebildet ist.

6. Vorrichtung nach einem der vorhergehenden Ansprüche,
bei welcher die Signalfolgenerzeugungsvorrichtung (30) dazu ausgebildet ist, eine digitale Signalfolge zur erzeugen.

7. Vorrichtung nach einem der vorhergehenden Ansprüche,
mit einem nichtflüchtigen Speicher (30), in dem Daten gespeichert sind,
bei welcher die Signalfolgenerzeugungsvorrichtung (30) dazu ausgebildet ist, die Signalfolge in Abhängigkeit von den Daten zu erzeugen, wobei die Daten insbesondere persönliche Daten in verschlüsselter Form enthalten.

8. Vorrichtung nach einem der vorhergehenden Ansprüche,
welche elektrische Kontakte (21, 25) zur Zufuhr einer Versorgungsspannung über eine Lesevorrichtung (200) aufweist.

9. Vorrichtung nach einem der vorhergehenden Ansprüche,
welche eine Antenne zur Zufuhr einer Versorgungsspannung über elektromagnetische Wellen aufweist.

10. Vorrichtung nach einem der vorhergehenden Ansprüche,
welche eine Solarzelle zur Zufuhr einer Versorgungsspannung über Licht aufweist.

11. Vorrichtung nach einem der vorhergehenden Ansprüche,
welche eine eigene Stromversorgung aufweist.

12. Vorrichtung nach einem der vorhergehenden Ansprüche,
welche eine Eingabeschnittstelle zur Eingabe von Lesegerätdaten eines Lesegeräts aufweist,
bei welcher die Signalfolgenerzeugungsvorrichtung (30) dazu ausgebildet ist, die Signalfolge in Abhängigkeit von den Lesegerätdaten zu erzeugen.

13. Vorrichtung nach einem der vorhergehenden Ansprüche,
bei welcher die Signalfolgenerzeugungsvorrichtung (30) dazu ausgebildet ist, mit einem Lesegerät (200) ein kryptografisches Protokoll zur Authentifizierung durchzuführen.

14. Vorrichtung nach einem der vorhergehenden Ansprüche,
welche mindestens ein Polarisationsfilter (107, 107') aufweist, insbesondere zwei senkrecht zueinander polarisierte Polarisationsfilter (107, 107'), wobei die Polarisationsfilter (107, 107') bevorzugt als Polarisationsfolien ausgebildet sind.

15. Vorrichtung nach einem der vorhergehenden Ansprüche,
welche eine Schalter-Matrix (35) zur Umwandlung der Signalfolge in eine Spannungsfolge an der Flüssigkristallzelle (100) aufweist.

16. Vorrichtung nach einem der vorhergehenden Ansprüche,
bei welcher die Signalfolge nur optisch auslesbar ist, wobei die Flüssigkristallzelle (100) bevorzugt eine reflektierende Schicht aufweist.

17. Auslesevorrichtung, welche dazu ausgebildet ist, das Auslesen einer Vorrichtung gemäß einem der vorhergehenden Ansprüche zu ermöglichen,
welche eine Lichtquelle (206) und eine Lichtdetektionsvorrichtung (208) aufweist, wobei die Lichtquelle (206) insbesondere eine LED und die Lichtdetektionsvorrichtung (208) insbesondere eine Photodiode aufweisen.

18. Auslesevorrichtung nach Anspruch 17,
bei welcher die Lichtquelle (206) und die Lichtdetektionsvorrichtung (208) derart zueinander angeordnet sind, dass ein Auslesen des Zustands einer Flüssigkristallzelle (100) möglich ist.

19. Auslesevorrichtung nach Anspruch 17 oder 18, mit einer Authentifizierungsvorrichtung, welche dazu ausgebildet ist, eine Authentifizierung durchzuführen.

20. Auslesevorrichtung nach Anspruch 19,
welche ein Eingabefeld (217) zur Eingabe eines persönlichen Zugangscodes aufweist, und welche insbesondere dazu ausgebildet ist, eine positive Authentifizierung nur nach Eingabe eines gültigen Zugangscodes zu ermöglichen.

21. Auslesevorrichtung nach einem der Ansprüche 17 bis 20, mit einer Steuervorrichtung (214), welche zur Weiterverarbeitung des von der Lichtdetektionsvorrichtung (208) detektierten Signals ausgebildet ist, welche insbesondere dazu ausgebildet ist, das von der Lichtdetektionsvorrichtung (208) detektierte Signal auszuwerten und ein den Erfolg oder Nicht-Erfolg der Authentifizierung charakterisierendes Signal auszugeben, und welche bevorzugt dazu ausgebildet ist, die Vollständigkeit der von der Lichtdetektionsvorrichtung (208) detektierten Signale zu überprüfen.

22. Auslesevorrichtung nach Anspruch 21,
bei welcher die Steuervorrichtung (214) dazu ausgebildet ist, das von der Lichtdetektionsvorrichtung (208) detektierte Signal über eine Ausgabeschnittstelle auszugeben.

23. Auslesevorrichtung nach einem der Ansprüche 21 oder 22,
bei welcher die Steuervorrichtung (214) zur Steuerung der Lichtquelle (206) ausgebildet ist.

24. Auslesevorrichtung nach einem der Ansprüche 17 bis 23, welche zur direkten Ansteuerung eines auf einer auszulesenden Karte befindlichen nicht-flüchtigen Speichers ausgebildet ist.

25. Türzugangssystem mit einer Auslesevorrichtung nach einem der Ansprüche 17 bis 24.

26. Computer-Authentifizierungssystem mit einer Auslesevorrichtung nach einem der Ansprüche 17 bis 24.

27. Computer-Authentifizierungssystem nach Anspruch 26, mit einem Server-System, welches dazu ausgebildet ist, über das Internet mit der Auslesevorrichtung (200) zu kommunizieren.

28. Computer-Authentifizierungssystem nach Anspruch 27, bei welchem die Kommunikation über einen mit der Auslesevorrichtung (200) verbundenen Computer erfolgt.
